(19) Europäisches Patentamt
European Patent Office
Office européen des brevets

(11) EP 0 666 689 B1

(12) EUROPEAN PATENT SPECIFICATION

(45) Date of publication and mention
of the grant of the patent:
04.11.1998 Bulletin 1998/45

(51) Int Cl.⁶: H04N 5/232

(21) Application number: 95420016.8

(22) Date of filing: 25.01.1995

(54) **Multi frame motion analysis using color**

Mehrrahmenbewegungsanalyse unter Benutzung von Farbe

Analyse de mouvement multi-trames utilisant la couleur

(84) Designated Contracting States:
DE FR GB

(30) Priority: 03.02.1994 US 190962

(43) Date of publication of application:
09.08.1995 Bulletin 1995/32

(73) Proprietor: EASTMAN KODAK COMPANY
Rochester, New York 14650-2201 (US)

(72) Inventor: Palm, Douglas Edward,
Eastman Kodak Company
Rochester, New York 14650-2201 (US)

(74) Representative: Buff, Michel et al
KODAK INDUSTRIE
Département Brevets - CRT
Zone Industrielle - B.P. 21
71102 Chalon sur Saône Cédex (FR)

(56) References cited:
EP-A- 0 312 780          WO-A-91/19383
US-A- 5 032 913

## Description

This invention relates, in general, to the processing of images and relates more particularly to the detection of a change or of motion in successive image frames of the same scene or event.

In many applications it is desirable to detect a change or motion in successive image frames of a scene or event. One such application involves the analysis of fast moving or fast changing phenomena in slow motion. A large number of image frames of an event are recorded at high speed and played back at slow speed to analyze any movement or change which has occurred in step by step progression. Applications for a motion analysis system includes, malfunctions in high speed machinery, movements of an athlete, testing of safety equipment, shattering of an object, and so forth. Another motion analysis application involves the analysis of image frames taken in a security environment. These image frames may be taken at low frame rates wherein any movement in a static scene is indicative of a security problem. In such application, successive image frames of the same scene are compared to determine any change or motion in the scene.

When successive image frames are compared visually on a frame by frame basis, subtle changes in the scene may not be readily apparent to the observer. Thus, the observer may need to replay the succession of image frames several times before a conclusion can be made that there has been a change or motion in a scene. Various proposals have been made to effect detection of a change or motion in successive image frames. US-A-5,034,811 discloses a solid state motion analysis system having a video trigger circuit which compares selected images produced by an imager to determine a change in the value of an image characteristic between images. When a change is determined, the video trigger circuit produces a trigger signal to alter the mode of operation of the motion analysis system. US-A-5,103,254 discloses a camera having highlighting for the subject of a photograph and detection of motion of the subject through a gradient operation on a digital image of the subject. US-A-5,032,914 discloses a circuit for detecting movement in a picture displayed on a television display. First and second movement detection signals with respect to luminance are rated as well as a movement detection signal with respect to color. US-A-4,823,184 discloses a color correction system with an improved scene-change detection module. The scene-change detection module processes video picture signals representative of images stored by an image recording medium to detect the start of a new scene. US-A-5,032,913 and US-A-4,393,394 disclose other motion detection circuits.

Although the motion detection circuits disclosed in the aforementioned patents may be appropriate for their intended uses, there exists a problem in the prior art to provide a scene change or motion detection technique which is based on visual observation and which is capable of detecting subtle changes or motion between successive image frames without the necessity of repetitive observation of the same image frames by an observer.

According to the present invention, there is provided a image change or motion detection technique which solves the problem of providing visual observation of subtle changes or motion in successive image frames of a scene or event.

According to an aspect of the present invention, there is provided a method of visually determining change or motion in a sequence of image frames comprising the steps of: providing first, second and third image frames of said sequence, and displaying said first, second and third image frames simultaneously as a single image frame on a color display, wherein said first image frame is displayed in a first color, said second image frame is displayed in a second color, and said third image frame is displayed in a third color, and said first, second and third colors being additive to a monochrome color. Display is carried out such that any region of the single image frame displayed on said color display which is stationary is displayed as a monochrome color. Any region of said displayed single frame image which represents a change between one or more of said provided image frames is displayed in a color other than said monochrome color, thus, indicating a change between said one or more provided image frames.

Figure 1 is a block diagram of apparatus incorporating the present invention.

Figure 2-9 are diagrammatic figures useful in explaining the present invention.

Figures 10, 11 and 12 are respective block diagrams illustrating various embodiments of the present invention.

Figure 13 is a partially block, partially schematic diagram of a color display useful in implementing the embodiments of the invention of Figures 10 and 11.

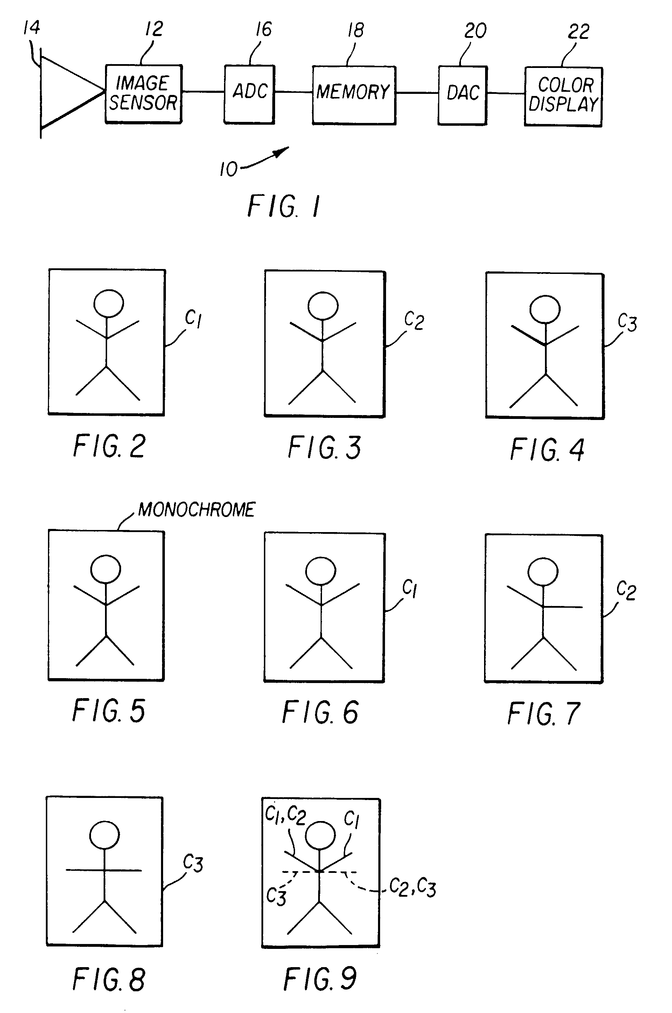

Referring now to Figure 1, there is shown a block diagram of an imaging system incorporating an embodiment of the present invention. As shown in Figure 1, imaging apparatus 10 includes an image sensor 12 for capturing successive image frames of an event, such as scene 14. Sensor 12 produces a sequence of analog image frames which are digitized by analog to digital converter (ADC) 16. The digital image frames are stored in digital memory 18. Digital image frames from memory 18 are converted to analog image frames by digital to analog converter (DAC) 20. The analog image frames are displayed on color display 22. Digital memory 18 may be solid state memory (for example, DRAM), optical or magnetic storage media. Color display 22 can be a CRT, LCD, or the like.

In a preferred application of the present invention, imaging apparatus 10 is a solid state motion analysis system, such as described in the above-referenced US-A-5,034,811. Motion analysis imaging systems are useful for analyzing rapidly changing events. In the disclosed motion analysis imaging system, a large number of image frames of an event are stored at a high or fast image frame rate and played back on a video monitor more slowly at a lower frame rate. Thus, any movement or change occurring during the event may be analyzed in a step by step progression. Difficulty arises when the imaged event or scene changes imperceptibly between image frames. According to the present invention, detecting and analyzing motion is made easier. In general, according to the invention, three successive image frames of a scene are simultaneously displayed on a color display with each image frame completely assigned to one of three colors, such as red, green and blue which are additive to a monochrome color. The display then shows any stationary object in shades of the monochrome color or gray. Any object in motion is colored, indicating that its position changes between each image frame.

The motion detection method of the present invention makes it easier to detect any changes taking place in a scene because a color accents the change. Moreover, subtle or imperceptible changes between image frames are detectable, thus, facilitating analysis of any motion or change in the scene.

Figures 2, 3, 4 and 5 are useful in explaining the operation of the present invention when there is no change in a scene over three consecutive image frames. As shown, Figures 2, 3 and 4 are consecutive image frames of a stick figure which shows no change or movement. The image frame depicted in Figure 2 is displayed in a color $C_1$, such as red; the image frame depicted in Figure 3 is displayed in a second color $C_2$, such as blue; and the image frame depicted in Figure 4 is displayed in a third color $C_3$, such as green. Colors $C_1$, $C_2$ and $C_3$ are additive to a monochrome color. When the image frames of Figures 2, 3 and 4 are displayed simultaneously in Figure 5, the depicted stick figure is displayed in a monochrome color since no change or motion in the figure takes place.

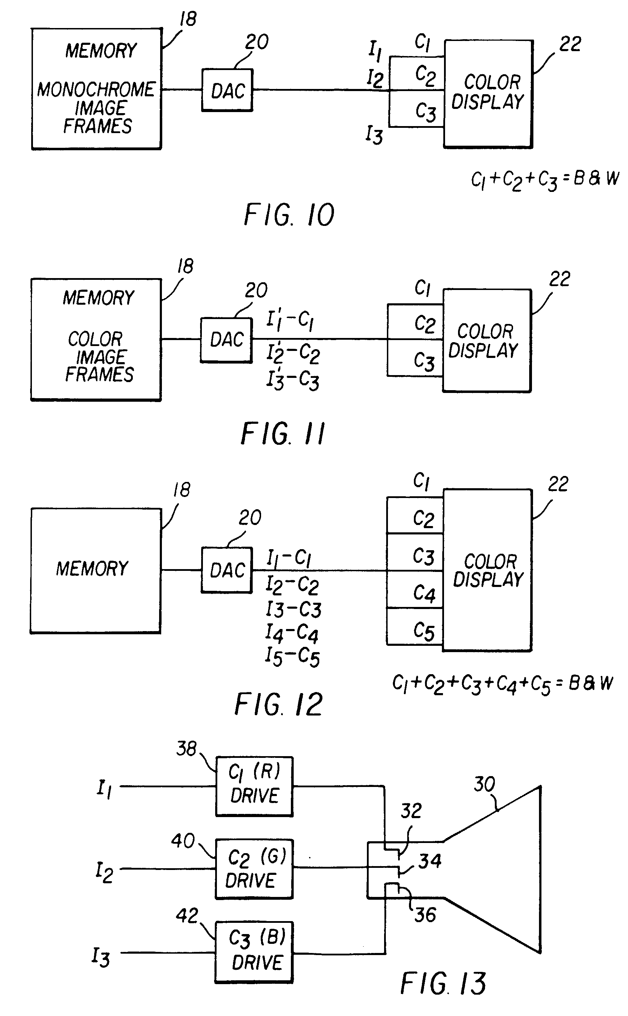

Figures 6, 7, 8 and 9 illustrate the situation where there is movement or a change from frame to frame. As shown in Figure 6, the stick figure is depicted as having raised arms. In Figure 7, the stick figure is depicted as lowering the right arm to a horizontal position, while maintaining the left arm in a raised position. In Figure 8, the stick figure is depicted as lowering the left arm to the horizontal position while maintaining the right arm in the horizontal position from Figure 7. According to an embodiment of the present invention, the image frame of Figure 6 is displayed as a color $C_1$, the image frame of Figure 7 is displayed as a color $C_2$, and the image depicted in Figure 8 is displayed as a color $C_3$. Figure 9 illustrates the simultaneous display of the image frame signals of Figures 6, 7 and 8. Stationary regions are depicted in a monochrome color. Changes in any region of Figures 6, 7 and 8 are depicted in color in Figure 9. Thus, in Figure 9 the right hand arm of the stick figure is shown in a raised position, in color $C_1$, and in a horizontal position, in colors $C_2$, $C_3$. Likewise, the left arm of the stick figure is shown in a raised position in colors $C_1$, $C_2$, and in a horizontal position, in color $C_3$.

Referring now to Figure 10, there will be described an embodiment of the present invention. In Figure 10, memory 18 stores a plurality of black and white or monochromatic image frames which represent a scene or event to be analyzed. A sequence of three monochromatic image frames are simultaneously applied to color display 22 after conversion by digital analog converter (DAC) 20. Image frames $I_1$, $I_2$ and $I_3$ are applied to the three color inputs of $C_1$, $C_2$ and $C_3$, respectively, of color display 22. Color display 22, as is well known in the art, can take the form of a color television receiver having a tri-color picture tube with three color guns (Fig. 13). The three colors $C_1$, $C_2$ and $C_3$ are typically red, green and blue and are additive to a monochrome color. By simultaneously applying image frames $I_1$, $I_2$ and $I_3$ to the red, green and blue color guns of the tri-color picture tube, $I_1$, $I_2$ and $I_3$ are simultaneously displayed on the screen of the tri-color picture tube such that $I_1$ is displayed in color $C_1$, or red; $I_2$ is displayed in color $C_2$, or green; and $I_3$ is displayed in color $C_3$, or blue.

Where there has been no change between $I_1$, $I_2$ and $I_3$, the image displayed on the screen of the tri-color tube will be monochrome. However, any change between $I_1$, $I_2$ and $I_3$ will be displayed in color. The displayed color indicates whether the change has been between $I_1$ and $I_2$, $I_1$ and $I_3$, or $I_2$ and $I_3$.

Referring now to Figure 11, there is illustrated another embodiment of the present invention. In Figure 11, memory 18 stores a plurality of color image frames of an event or scene to be analyzed. Each color image frame has image content in the colors $C_1$, $C_2$ and $C_3$. According to the present invention, three color image frames are simultaneously displayed on color display 22, such that each image frame is displayed in one of its component colors. As shown, color image frame $I'_1$ is displayed in its color component $C_1$, color image frame $I'_2$ is displayed in its component color $C_2$, and color image frame $I'_3$ is displayed in its component color $C_3$. The single image frame displayed on color display 22 will be in monochrome color, where there is no change in color between image frames $I'_1$, $I'_2$ and $I'_3$, but will be in color in the region where there is a change between one or more of the simultaneously displayed image frames. It will be understood that the color image frames may be displayed simultaneously in any of the three component colors, but that each image frame displayed must be in a different component color than the component color of the other image frames displayed.

Referring now to Figure 12, there is shown another embodiment of the present invention. Although in the embodiments described above, three image frames are simultaneously displayed in three different colors which are additive to a monochrome color, the present invention is not limited to the simultaneous display of only three image frames. Thus, any number of image frames can be displayed simultaneously by dividing the color spectrum into the same number of color vectors, which, when displayed simultaneously, add to a monochrome color. When there is no change between the displayed image frames, the single image frame is displayed in a monochrome color. Any motion or change in the scene would then be displayed in the colors associated with each image frame. Referring to Figure 12, there is shown an embodiment of the present invention in which the colors $C_1$, $C_2$, $C_3$, $C_4$ and $C_5$ are additive to a monochrome color. As shown, image frames $I_1$, $I_2$, $I_3$, $I_4$ and $I_5$ stored in memory 18 are converted to analog image frames by digital to analog converter 20 and simultaneously applied to the color inputs $C_1$, $C_2$, $C_3$, $C_4$, $C_5$, respectively, of color display 22. Thus, $I_1$ is displayed in color $C_1$, $I_2$ in color $C_2$, $I_3$ in color $C_3$, $I_4$ in color $C_4$, and $I_5$ in color $C_5$. Color display 22 would be modified to accept the five inputs and have five color guns in the appropriate color.

Figure 13 is illustrative of a tri-color cathode ray tube which may be used in the color display 22. As shown, tri-color cathode ray tube 30 includes a red gun 32, a green gun 34, and a blue gun 36, corresponding to colors $C_1$, $C_2$ and $C_3$. Image frames $I_1$, $I_2$ and $I_3$ are applied to guns 32, 34 and 36, respectively, by means of drives 38, 40 and 42. An exemplary tri-color cathode ray tube is described in chapter 4 of the textbook entitled "Basic Television and Video Systems", Fifth Edition, by Bernard Grob, McGraw Hill Book Company, New York, 1984.

Although specific embodiments of the present invention have been described above, it will be understood that modifications may be made within the scope of the present invention. Thus, the number of image frames which are displayed simultaneously can be any number of image frames with three image frames being the default value. In addition, the display options could be either the regular display of individual image frames in sequence, or the simultaneous display of a plurality of image frames as a color overlay.

The motion detection technique finds application in video imagings systems requiring detection of a scene change or motion from scene to scene. The technique is advantageous because it is based on visual observation and is capable of detecting subtle changes or motion between successive image frames without the necessity of repetitive observation of the same image frames by an observer.

## Claims

1. A method of visually determining a change in a sequence of image frames, comprising the steps of:

   providing first, second and third image frames of said sequence; and

   displaying the first, second and third image frames simultaneously as a single image frame on a color display;
   wherein the first image frame is displayed in a first color, the second image frame is displayed in a second color, and the third image frame is displayed in a third color;

   CHARACTERIZED IN THAT the first, second and third colors are chosen to be additive to a monochrome color; and

   the displaying step is carried out such that any region of the displayed single image frame which is stationary is displayed in the monochrome color, and any region of the displayed single image frame which represents a change between one or more of the provided image frames is displayed in a color other than the monochrome color.

2. The method of claim 1 wherein the first, second and third image frames are provided as monochrome image frames, and wherein in the displaying step, the first, second and third monochrome image frames are displayed on the color display in the first color, the second color, and the third color, respectively.

3. The method of claim 1 wherein the first, second and third image frames are color image frames each having first, second and third colors as component colors thereof, and wherein, in the displaying step, the first image frame is displayed in one of the first, second and third colors, the second image frame is displayed in another of the first, second and third colors, and the third image frame is displayed in the last of the first, second and third colors.

4. Apparatus (10) for visually determining a change in a sequence of images, comprising:

   a memory (18) for storing at least first, second and third image frames of said sequence; and
   a color display (22) for simultaneously displaying as a single image the first, second and third image frames in respective first, second and third colors;

   CHARACTERIZED IN THAT the first, second and third colors are additive to a monochrome color; and in that

   the color display is adapted to operate such that any region of the displayed single frame which is stationary is displayed in the monochrome color, and any region of the displayed single frame image which represents a change between one or more of the image frames is displayed in a color other than the monochrome color, thus indicating a change between the displayed image frames.

5. The apparatus (10) of claim 4 wherein the memory (18) stores at least first, second and third monochrome image frames, and wherein the color display (22) simultaneously displays the first, second and third monochrome image frames stored in the memory in the first, second and third colors.

6. The apparatus (10) of claim 4 wherein the memory (18) stores at least first, second and third color image frames, each of which has the first, second and third colors as component colors thereof, and wherein the color display (22) displays the first color image frame in one of the first, second and third colors, displays the second color image frame in another of the first, second and third colors, and displays the third color image frame in the last of the first, second and third colors.

7. A method of visually determining a change in a sequence of image frames, comprising the steps of:

    providing n image frames of said sequence, where n is equal to or greater than three; and displaying the n image frames simultaneously as a single image frame on a color display;

    wherein each of the image frames is displayed in a different one of n colors, respectively;

    CHARACTERIZED IN THAT the n colors are additive to a monochrome color; and in that

    the display step is carried out such that any region of the displayed single image frame which is stationary is displayed in the monochrome color, and any region of the displayed single image frame which represents a change between one or more of the provided image frames is displayed in a color other than the monochrome color.

**Patentansprüche**

1. Verfahren zum visuellen Bestimmen einer Veränderung in einer Folge von Bildfeldern, wobei das Verfahren folgende Schritte umfaßt:

    -  Bereitstellen eines ersten, zweiten und dritten Bildfeldes der Folge; und
    -  gleichzeitiges Wiedergeben des ersten, zweiten und dritten Bildfeldes als ein einziges Bildfeld auf einer Farbanzeige;

    -  wobei das erste Bildfeld in einer ersten Farbe, das zweite Bildfeld in einer zweiten Farbe, und das dritte Bildfeld in einer dritten Farbe wiedergegeben wird;

**dadurch gekennzeichnet, daß**

    -  die erste, zweite und dritte Farbe ausgewählt wird, um einer monochromen Farbe hinzugefügt zu werden; und
    -  der Wiedergabeschritt derart durchgeführt wird, daß jeder Bereich des wiedergegebenen einzigen stationären Bildfeldes in der monochromen Farbe wiedergegeben wird und jeder Bereich, der zwischen einem oder mehreren der bereitgestellten Bildfelder eine Veränderung darstellt, in einer von der monochromen Farbe abweichenden Farbe wiedergegeben wird.

2. Verfahren nach Anspruch 1, dadurch gekennzeichnet, daß das erste, zweite und dritte Bildfeld jeweils als monochromes Bildfeld bereitgestellt wird, und daß im Wiedergabeschritt das erste, zweite und dritte monochrome Bildfeld auf der Farbanzeige in der ersten, zweiten bzw. dritten Farbe wiedergegeben wird.

3. Verfahren nach Anspruch 1, dadurch gekennzeichnet, daß das erste, zweite und dritte Bildfeld jeweils ein Farb-Bildfeld ist, welches eine erste, zweite und dritte Farbe als Farbkomponenten aufweist, und daß im Wiedergabeschritt das erste Bildfeld in einer der drei Farben, das zweite Bildfeld in einer anderen der drei Farben und das dritte Bildfeld in der verbleibenden der drei Farben wiedergegeben wird.

4. Vorrichtung (10) zum visuellen Bestimmen einer Veränderung in einer Bildfolge, wobei die Vorrichtung folgende Komponenten aufweist:

    -  einen Speicher (18) zum Speichern des zumindest ersten, zweiten und dritten Bildfelds der Folge; und
    -  eine Farbanzeige (22) zum gleichzeitigen Wiedergeben des ersten, zweiten und dritten Bildfeldes in jeweils einer ersten, zweiten bzw. dritten Farbe ;

**dadurch gekennzeichnet, daß**

    -  die erste, zweite und dritte Farbe zu einer monochromen Farbe hinzufügbar ist; und
    -  die Farbanzeige so arbeitet, daß jeder Bereich des wiedergegebenen einzigen Bildfeldes, der stationär ist, in der monochromen Farbe wiedergegeben wird und jeder Bereich, der zwischen einem oder mehreren der Bildfelder eine Veränderung darstellt, in einer von der monochromen Farbe abweichenden Farbe wiedergegeben wird und somit eine Veränderung zwischen den wiedergegebenen Bildfeldern anzeigt.

5. Vorrichtung nach Anspruch 4, dadurch gekennzeichnet, daß der Speicher (18) zumindest das erste, zweite und dritte monochrome Bildfeld speichert, und daß die Farbanzeige (22) das erste zweite und dritte monochrome Bildfeld, das im Speicher gespeichert ist, gleichzeitig in der ersten, zweiten und dritten Farbe wiedergibt.

6. Vorrichtung nach Anspruch 4, dadurch gekennzeichnet, daß der Speicher (18) zumindest das erste, zweite und dritte Farb-Bildfeld speichert, von denen jedes die erste, zweit und dritte Farbe als Farbkomponente aufweist, und daß die Farbanzeige (22) das erste Farb-Bildfeld in einer der drei Farben, das zweite Farb-Bildfeld in einer anderen der drei Farben und das dritte Farb-Bildfeld in der verbleibenden der drei Farben wiedergibt.

7. Verfahren zum visuellen Bestimmen einer Veränderung in einer Folge von Bildfeldern, wobei das Verfahren folgende Schritte umfaßt:

- Bereitstellen von n Bildfeldern der Folge, wobei n gleich oder größer drei ist; und
- gleichzeitiges Wiedergeben der n Bildfelder als ein einziges Bildfeld auf einer Farbanzeige;
- wobei die Bildfelder jeweils in einer anderen der n Farben wiedergegeben werden;

**dadurch gekennzeichnet,** daß

- die n Farben zu einer monochromen Farbe hinzugefügt werden; und
- der Wiedergabeschritt derart durchgeführt wird, daß jeder Bereich des wiedergegebenen einzigen stationären Bildfeldes in der monochromen Farbe wiedergegeben wird und jeder Bereich, der zwischen einem oder mehreren der bereitgestellten Bildfelder eine Veränderung darstellt, in einer von der monochromen Farbe abweichenden Farbe wiedergegeben wird.

**Revendications**

1. Procédé de détermination visuelle d'un changement dans une séquence de trames d'images, comprenant les étapes suivantes :

fournir des première, seconde et troisième trames d'images de ladite séquence, et

afficher les première, seconde et troisième trames d'images simultanément sous forme d'une trame d'image unique sur un dispositif d'affichage en couleur,

dans lequel la première trame d'image est affichée dans une première couleur, la seconde trame d'image est affichée dans une seconde couleur, et la troisième trame d'image est affichée dans une troisième couleur, caractérisé en ce que les première, seconde et troisième couleurs sont choisies pour être additives en une couleur monochrome, et

l'étape d'affichage est exécutée de façon à ce que toute région quelconque de la trame d'image unique affichée qui est immobile, soit affichée dans la couleur monochrome, et toute région quelconque de la trame d'image unique affichée qui représente un changement entre une ou plusieurs des trames d'images fournies, soit affichée dans une couleur autre que la couleur monochrome.

2. Procédé selon la revendication 1, dans lequel les première, seconde et troisième trames d'images sont fournies sous forme de trames d'images monochromes, et dans lequel, au cours de l'étape d'affichage, les première, seconde et troisième trames d'images monochromes sont affichées sur le dispositif d'affichage en couleur dans la première couleur, la seconde couleur, et la troisième couleur, respectivement.

3. Procédé selon la revendication 1, dans lequel les première, seconde et troisième trames d'images sont des trames d'images en couleur, présentant chacune une première, seconde et troisième couleur sous forme de couleurs de composantes de celles-ci, et dans lequel, au cours de l'étape d'affichage, la première trame d'image est affichée dans l'une des première, seconde et troisième couleurs, la seconde trame d'image est affichée dans une autre des première, seconde et troisième couleurs, et la troisième trame d'image est affichée dans la dernière des première, seconde et troisième couleurs.

4. Dispositif (10) destiné à déterminer visuellement un changement dans une séquence d'images, comprenant :

une mémoire (18) destinée à mémoriser au moins des première, seconde et troisième trames d'images de ladite séquence, et
un dispositif d'affichage en couleur (22) destiné à afficher simultanément sous forme d'une seule image les première, seconde et troisième trames d'images dans des première, seconde et troisième couleurs respectives,

caractérisé en ce que les première, seconde et troisième couleurs sont additives en une couleur monochrome, et en ce que

le dispositif d'affichage en couleur est conçu pour fonctionner de façon à ce que toute région quelconque de la trame unique affichée qui est immobile soit affichée dans la couleur monochrome, et que toute région quelconque de l'image de la trame unique affichée qui représente un changement entre une ou plusieurs des trames d'images soit affichée dans une couleur autre que la couleur monochrome, en indiquant ainsi un changement entre les trames d'images affichées.

5. Dispositif (10) selon la revendication 4, dans lequel la mémoire (18) mémorise au moins des première, seconde et troisième trames d'images monochromes, et dans lequel le dispositif d'affichage en couleur (22) affiche simultanément les première, seconde et troisième trames d'images monochromes mémorisées dans la mémoire dans les première, seconde et troisième couleurs.

6. Dispositif (10) selon la revendication 4, dans lequel la mémoire (18) mémorise au moins les première, seconde et troisième trames d'images en couleur, dont chacune comporte les première, seconde et troisième couleurs de composantes de celles-ci (4), et dans lequel le dispositif d'affichage en couleur (22) affiche la première trame d'image en couleur dans l'une des première, seconde et troisième couleurs, affiche la seconde trame d'image en couleur dans une autre des première, seconde et troisième couleurs, et affiche la troisième trame d'image en couleur dans la dernière, des première, seconde et troisième couleurs.

7. Procédé consistant à déterminer visuellement un changement dans une séquence de trames d'images, comprenant les étapes consistant à :

fournir n trames d'images de ladite séquence, dans lequel n est supérieur ou égal à trois, et afficher les n trames d'images simultanément sous forme d'une trame d'image unique sur un dispositif d'affichage en couleur, dans lequel chacune des trames d'images est affichée dans une couleur différente parmi n couleurs, respectivement,

caractérisé en ce que les n couleurs sont additives en une couleur monochrome, et en ce que

l'étape d'affichage est exécutée de façon à ce que toute région quelconque de la trame d'image unique affichée qui est immobile, soit affichée dans la couleur monochrome, et toute région quelconque de la trame d'image unique affichée qui représente un changement entre une ou plusieurs des trames d'images fournies soit affichée dans une couleur autre que la couleur monochrome.

FIG. 1

FIG. 2

FIG. 3

FIG. 4

MONOCHROME

FIG. 5

FIG. 6

FIG. 7

FIG. 8

FIG. 9

MEMORY
*18*

MONOCHROME
IMAGE
FRAMES

DAC
*20*

$I_1$
$I_2$
$I_3$

$C_1$
$C_2$
$C_3$

COLOR
DISPLAY
*22*

$C_1 + C_2 + C_3 = B \& W$

FIG. 10

MEMORY
*18*

COLOR
IMAGE
FRAMES

DAC
*20*

$I_1' - C_1$
$I_2' - C_2$
$I_3' - C_3$

$C_1$
$C_2$
$C_3$

COLOR
DISPLAY
*22*

FIG. 11

MEMORY
*18*

DAC
*20*

$I_1 - C_1$
$I_2 - C_2$
$I_3 - C_3$
$I_4 - C_4$
$I_5 - C_5$

$C_1$
$C_2$
$C_3$
$C_4$
$C_5$

COLOR
DISPLAY
*22*

$C_1 + C_2 + C_3 + C_4 + C_5 = B \& W$

FIG. 12

$I_1$

$C_1$ (R)
DRIVE
*38*

$I_2$

$C_2$ (G)
DRIVE
*40*

$I_3$

$C_3$ (B)
DRIVE
*42*

*32*
*34*
*36*
*30*

FIG. 13

9